# NEW EUROPEAN PATENT SPECIFICATION

(11) **EP 0 260 750 B2**
(45) Date of publication and mention of the opposition decision: **03.02.1999**
(45) Mention of the grant of the patent: 20.04.1994
(21) Application number: 87201721.5
(22) Date of filing: 10.09.1987
(51) Int. Cl.: A01D 34/66

(54) **A mowing machine**
Mähmaschine
Faucheuse

(30) Priority: 11.09.1986 NL 8602289
(43) Date of publication of application: 23.03.1988
(73) Proprietor: C. van der Lely N.V., 3155 PD Maasland (NL)
(72) Inventor: Van der Lely, Ary, Maasland (NL); Bom, Cornelis Johannes Gerardus, Rozenburg (NL)
(74) Representative: Corten, Maurice Jean F.M.

(56) References cited:
- EP-A- 0 060 600
- EP-A- 0 155 063
- FR-A- 1 545 171
- FR-A- 2 077 995
- FR-A- 2 268 452
- FR-A- 2 557 418
- GB-A- 1 489 373
- GB-A- 2 059 236
- GB-A- 2 118 814
- US-A- 2 777 272
- US-A- 3 665 685
- US-A- 3 729 907
- US-A- 3 835 629
- US-A- 4 157 004

## Description

The invention concerns a mowing machine comprising a frame having a supporting beam to which are arranged a plurality of mower members, each of which being rotatable about a generally vertical axis of rotation, said supporting beam being provided with a shoe cap fixed in its position near the front side of the supporting beam and with an adjustable shoe which is movable at least partly in height relative to the supporting beam and which has a supporting face bearing during operation of the mowing machine with at least a part of the weight of the machine on the soil, said adjustable shoe being situated rearwardly of said shoe cap.

A mowing machine of this kind is known from the FR-A-2 077 995. This known mowing machine comprises a supporting beam in the form of a base plate for supporting the mowing members. A stiff plate forming a shoe cap is fixed to the front side of the said supporting beam and extends downwardly and rearwardly for guiding the supporting beam over irregularities present on the soil. The said known mowing machine comprises an adjustable shoe movable in height relative to the supporting beam and situated rearwardly of the shoe cap and below the supporting beam.

It is an object of the invention to improve the support of the mowing machine on the soil.

According to the invention, this can be achieved in that the shoe cap is arranged at the front side of and integral with a supporting shoe mounted in a fixed position relative to the supporting beam and extending below said beam, whereby the shoe cap is situated in front of the supporting beam and the supporting shoe extends from the front side of a plane containing the axes of rotation of the mowing members to behind said plane, the adjustable shoe forms a rear shoe situated behind the supporting beam and is hingeably mounted relative to the supporting beam about a pivot axis situated rearwards of the supporting beam and near the rear side of the supporting beam, the pivot axis is arranged near the front side of the supporting face of the rear shoe, the shoe cap and the supporting shoe being on their bottom side integrally formed by a plate, which is bent along a bending line located in front of the said plane containing the axes of rotation of the mowing members but near said plane, at least part of the machine being supported, during operation, in at least two different orientations of the axes of rotation of the mowing members, on the supporting shoe along said bending line and on the supporting face of the rear shoe, said mowing machine comprising a carrying frame having a coupling trestle by means of which the mowing machine can be coupled to the lifting arms of a three-point lifting hitch of a tractor or a suchlike vehicle. Due to the presence of said rear shoe, the mowing machine obtains a more rearwardly located support which advantageously influences a proper stability of the machine on the soil.

A proper stability of the mowing machine on the soil is advantageous for constantly maintaining the mowing level selected in an appropriate manner.

The construction known from the FR-A-2 077 995 does not have a fixed supporting shoe arranged below the supporting beam and a pivotable rear shoe arranged, relative to the normal direction of operative travel, behind the supporting beam and behind a supporting shoe.

Mowing machines having sickle bar cutting mechanisms are known from the US references 3 835 629 and 3 729 907. These known mowing machines are provided with supporting shoes movable in height relative to the frame and situated behind the sickle bars. However, these known constructions do not have rotatable mowing members and are not provided with supporting shoes and rear shoes.

From a spareparts list for the mower-crimper KM 240 series 27005 of Vicon a mowing machine is known having a supporting beam with a plurality of mowing members. The supporting beam is provided with a shoe cap which is fixed in a position near the front side of the supporting beam.

However, the machine described in this spareparts list does not show a number of features of the invention e.g. that at least part of the machine is supported during operation on an adjustable shoe and on a supporting shoe and that the mowing machine can be pivoted so as to have at least two orientations of the axis of rotation of the mowing members, whereas there is no bending line between a shoe cap and a supporting shoe which is located in front of a plane containing the axis of rotation of the mowing members. Therefor the advantages of the construction according to the invention are not obtained.

According to the invention, a rear shoe can in an appropriate manner be conducive to the stability of the mowing machine when, seen in plan view, the adjustable rear shoe is arranged relative to the supporting beam near the attachment of a further processing member to said supporting beam. In this manner, the weight of the further processing member can be taken up properly by the rear shoe. As a result, other parts of the machine will be loaded as little as possible. An advantageous construction of the mowing machine according to the invention is obtained when the processing member is mounted on at least one carrier arm attached to a frame beam, which is located above the mower members and which is connected to the supporting beam. A very useful embodiment is obtained when there is arranged an adjustable rear shoe near each end of the supporting beam and the processing member is located behind the plane containing the axes of rotation of the mowing member. Hereby the rear shoe situated behind the supporting beam may support especially the weight of the processing member. This will be of advantage for the stability of the mowing machine during operation.

In accordance with a further embodiment of the mowing machine according to the invention, the supporting beam is composed of drive units and spacers arranged therebetween, which drive units and spacers are drawn up against each other under tension by means of a tensile member, and the adjustable rear shoe is provided on a drive unit of the supporting beam. The support of such a supporting beam, to be relieved in an advantageous manner by the rear shoe, can contribute to the strength of the mowing machine according to the invention. In this connection, due to this composition of the supporting beam it is possible to provide in a simple manner mowing machines of differing and/or great lengths. An advantageous embodiment of the machine according to the invention is obtained when at the ends of the supporting beam there are provided end plates which are clamped thereagainst by the tensile rod, a rear shoe having been arranged to the end plate extending rearward of the supporting beam.

According to the invention, for a proper take-up of the forces to be transferred to the soil and the obtainment of a proper adaptation of the mowing machine to the unevennesses thereof, it may furthermore be of importance that, during operation, an adjustable rear shoe is, at least partly, resiliently movable in height relative to the frame.

According to the invention, the adjustable rear shoe is fixable selectively in one of at least two different positions relative to the supporting beam in order to be able to adjust its position relative to the mowing machine's frame in dependence on the more or less forwardly inclined position of the mower members for determining the cutting height of the crop. An advantageous supporting of the machine is according to a further embodiment obtained when, seen in side view, an adjustable rear shoe has a substantially straight supporting face which, during operation, bears on the surface of the soil, over which the mowing machine can be moved during operation. Hereby the cutting height of the mowing members can be selected in a good way by the fact that according to the invention the supporting face of the rear shoe is situated at least approximately parallel to the plane enclosing the bending line formed between the bottom side of the supporting shoe and the bottom side of the shoe cap arranged at the front side of the supporting shoe.

According to a further embodiment of the invention, shoe caps are arranged below adjacent mower members, while the side edges of adjacent shoe caps, from a point where they are closest, towards the rear relative to the direction of operative travel of the machine, diverge to at least near the front side of the supporting beam. Thus, the adherence of soil to the supporting beam will be prevented. Consequently, the weight of the machine will not increase during operation, so that it can rest via the supporting shoes and rear shoes with a constant surface pressure onto the soil. Hereby, a constant mowing action is maintained during operation.

According to the invention, the support of the mowing machine by an adjustable rear shoe can be applied advantageously in a mowing machine which by means of the supporting frame carrying the mower members is pivotably coupled to a carrying frame. A favourable construction of the mowing machine according to the invention is obtained when the supporting beam carrying the mower members is of a hollow structure enclosing a drive shaft and transmission members via which the drive shaft is coupled to the mower members, which drive shaft is coupled via transmission members to the coupling shaft connectable to the power take-off shaft of a tractor or a suchlike vehicle, and when the processing member is rotatable about an axis and via a coupling shaft and an exchange gear box provided with exchange gear wheels is coupled to the coupling shaft.

For a better understanding of the invention and to show how the same may be carried into effect, reference will now be made, by way of example, to the following drawings, in which:
Figure 1 is a plan view of a mowing machine according to the invention;
Figure 2 is, to an enlarged scale, a partial plan view of the mowing machine, taken on the line II - II in Figure 4;
Figure 3 is a view of a part of the machine, taken on the line III -III in Figure 2;
Figure 4 is a view of a part of the machine, taken on the line IV - IV in Figure 2;
Figure 5 is, to an enlarged scale, a view of the machine, taken on the line V - V in Figure 1;
Figure 6 is a horizontal cross-section of the part of the machine shown in Figure 5, taken on the line VI - VI in Figure 5;
Figure 7 is a side view of another embodiment of a part of the machine;
Figure 8 is a side view of again another embodiment of the part of the mowing machine;
Figure 9 is a side view of a subsequent embodiment of the part of the mowing machine;
Figure 10 is a side view of again another embodiment of the part of the machine;
Figure 11 is a side view of again another embodiment of the part of the machine, and
Figure 12 is a side view of another embodiment of a rear shoe.

In accordance with the embodiment shown, the mowing machine 1 comprises a mowing section 2 and a carrying frame 3.

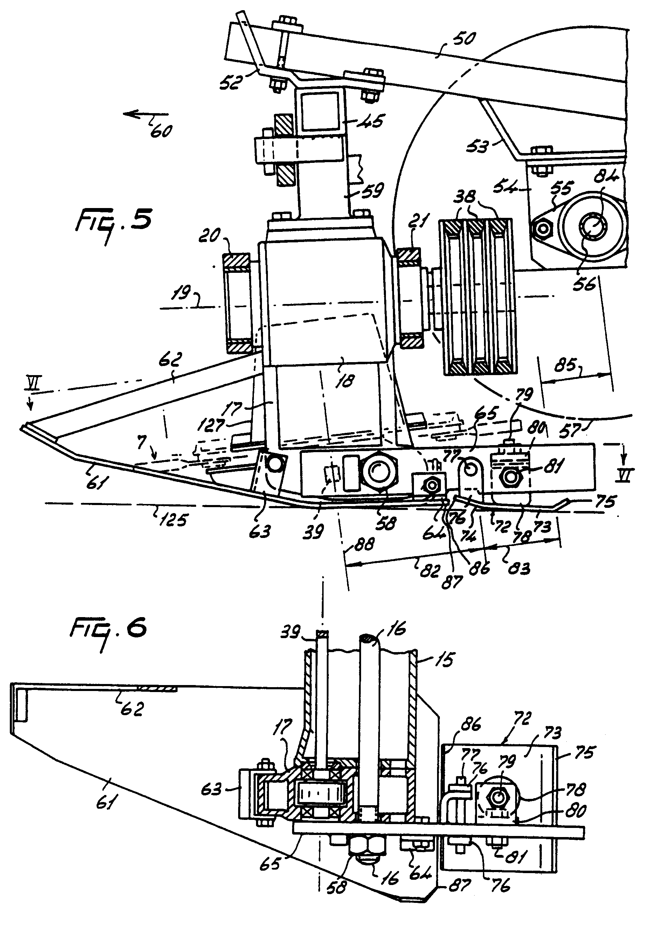

The mowing section 2 comprises a supporting beam 6 constituting part of a frame, to which beam, in this embodiment, there are arranged six mower members 7 to 12. Each of the mower members is connected to the supporting beam 6 capable of rotation about an axis of rotation 13 extending in height. The supporting beam 6 is composed of drive units 14 and spacers 15. The drive units 14 and the spacers 15 are intercoupled by means of a tensile rod 16 extending therethrough. Said tensile rod 16 extends over the entire length of said supporting beam 6. The end of the supporting beam 6 facing the carrying frame 3 is connected to a gear box 17 extending upwardly from the supporting beam 6, the top side of which gear box is connected to a transmission box 18 located beside said gear box 17. As is apparent in particular from Figure 6, the supporting beam 6 is connected to the gear box 17 by means of the tensile rod 16. The transmission box 18 is arranged pivotably about a pivot axis 19 between two lugs 20 and 21. The lugs 20 and 21 are provided at the end of a carrier arm 22 of the carrying frame 3 facing the mowing section 2. The end of the carrier arm 22 facing away from the mowing section is connected pivotably in a manner not shown in further detail about a pivot axis parallel to the pivot axis 19 to the lower end of a vertically extending U-shaped carrier bracket 23. The legs of the U-shaped carrier bracket 23 extend substantially horizontally to the front and are connected by means of a vertical pivot axis 24 to strips 25, which are arranged rigidly to a coupling trestle 26 forming part of the carrying frame. The coupling trestle 26 comprises coupling pins 27, by means of which the mowing machine can be coupled to the lifting arms 29 of a three-point lifting hitch of a tractor or a suchlike vehicle. Furthermore, the coupling trestle 26 comprises coupling strips 28, which can be coupled to the top rod 30 of the three-point lifting hitch of a tractor or a suchlike vehicle.

In a manner not shown in further detail, between the top side of the bracket 23 and the part of the mowing section 2 located near the pivot axis 19 there are arranged two tensile springs 31 and a lifting hitch 32.

The carrier arm 22 includes a bearing bushing 36 accommodating a coupling shaft 37. The front end of the coupling shaft 37 is connectable to the power take-off shaft of a tractor or a suchlike vehicle via an intermediate shaft, which, however, has not been shown in further detail. By means of rope transmission 38, the coupling shaft 37 is connected to transmission members in the transmission box 18 and via said transmission members to gear wheels in the gear box 17. The gear wheels in the gear box 17 are coupled to a drive shaft 39 extending in the supporting beam 6. Via transmission members, like bevel gear wheels (not shown in further detail), arranged in the drive units 14 the drive shaft 39 is coupled to the axes 40. The centre lines of the axes 40 constitute the axes of rotation 13 of the mowing members. Each of the drive units 14 arranged in the supporting beam 6 comprises an axis 40, to which one of the mowing members 7 to 12 is attached. The transmission between the shaft 37 and the axes 40 is such that the mowing members are drivable in the desired direction. In this embodiment, the transmission is such that adjacent mowing members can be rotated from the drive shaft 39 in opposite directions 41 relative to each other.

The mowing section 2 comprises a frame beam 45 arranged parallel to the supporting beam 6 and spaced above the mowing members 7 to 12. The frame beam 45 extends over the entire length of the supporting beam 6, which is located below the mowing members 7 to 12. The end of the frame beam 45 facing away from the carrying frame 3 is coupled to the end of the supporting beam 6 located below the mowing member 12 and facing away from the carrying frame 3. In this connection, the end of the supporting beam 6 is constituted by a drive unit 14. For the coupling of the frame beam 45 to the supporting frame 6, there is arranged rigidly at the end of the frame beam 45, at its bottom side, a coupling plate 46. The coupling plate 46 is connected via a bolt connection to a coupling plate 47, which is arranged rigidly at the top end of a support arm 48. The support arm 46 extends, relative to the direction of operative travel 60, from the coupling plate 47 obliquely to the rear and is connected to the rear end of an end plate 49. The end plate 49 is secured rigidly against the end of the supporting beam 6 by means of the tensile rod 16 and a nut 58 provided thereon. The end of the frame beam 45 facing the carrying frame 3 is rigidly connected in a manner not further shown to the top side of the gear box 17 and the transmission box 18 via a support 59. The supporting beam 6, the beam 45, the supports 48 and 49 and the gear box 17 constitute a frame around the row of mowing members 7 to 12.

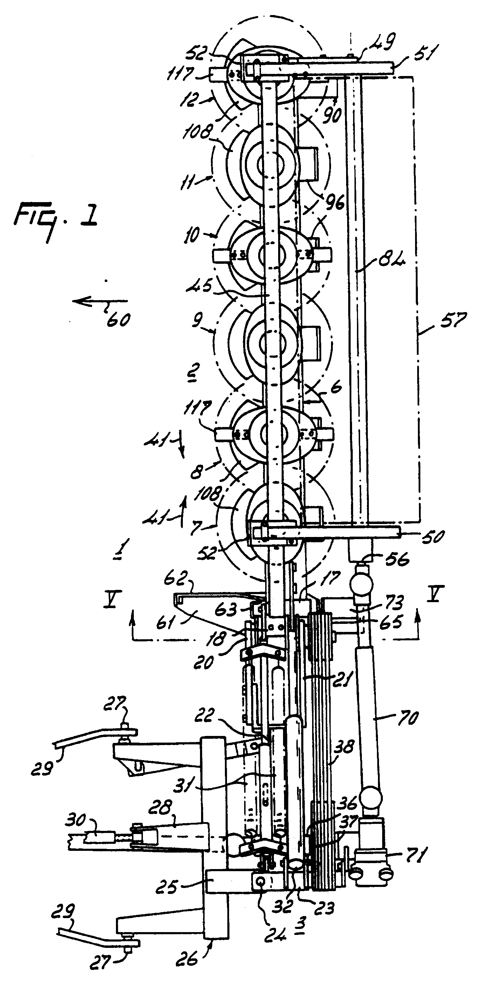

At the mowing section 2 there is arranged a crop processing member 57, in this embodiment a crusher member. For the attachment of the processing member 57 to the machine there are arranged to the frame beam 45 two frame arms 50 and 51. By means of a bolt connection, said frame arms are secured to connection plates 52 attached to the frame beam 45. The frame arms 50 and 51 extend, relative to the direction of operative travel 60 of the implement, from the top side of the frame beam 45 towards the rear. In this embodiment, the frame arms 50 and 51 extend slightly obliquely downwardly and rearwardly. Near their rear sides, the frame arms are provided with a carrier bracket 53, on which are mountred support plates 54. On said support plates 54 there are arranged bearings 55, wherein a shaft 56 of the processing member 57 is bearing-supported capable of rotation. The processing member 57 extends substantially over the entire length of the mowing width of the mowing machine constituted by mowing members 7 to 12. In this embodiment, the processing member 57 extends over a distance which is equal to that between the axes of rotation 13 of the row of adjacent mowing members 7 to 12. In this connection, the frame arms 50 and 51 are interspaced by a distance which is slightly greater than the length of the processing member 57, so that said processing member is capable of rotation between said frame arms 50 and 51. As is apparent from Figure 1, the shaft 56 of the processing member 57 is coupled via a coupling shaft 70 with the gear transmission in a gear box 71 and via this gear transmission with the coupling shaft 37. The gear transmission in the gear box 71 comprises exchange gear wheels which, in a manner not shown in further detail, can be exchanged via a cover that is removable therefrom.

Below the gear box 17 there is provided an inner shoe 61 constituting a supporting shoe, the front side of which is attached by means of a strip 62 to a higher part of the gear box 17. The middle portion of the shoe 61 is connected by means of a bracket 63 to the lower front side of the gear box 17. The rear side of the shoe is connected by means of a bracket 64 to an end plate 65, which is secured against the side of the gear box 17 facing the carrying frame 3 by means of the tensile rod 16. Near the end facing away from the carrying frame 3, the supporting beam 6 is provided with an outer shoe 66 constituting a supporting shoe. The outer shoe 66 is located below the drive unit 14, to which the mowing member 12 is arranged. The outer shoe 66 is connected by means of a bolt 67 to the front side of the said drive unit 14 and by means of bolts 68 to the rear side thereof. In the same manner as has been indicated for the outer shoe 66, the drive units 14 of the mowing members 7 to 11 are provided with middle shoes 69 constituting supporting shoes.

Relative to the direction of operative travel 60, the mowing section 2 comprises a rear shoe 72 located behind the inner shoe 61. Seen in side view, said rear shoe 72 has a straight supporting face 73. At the front side of the supporting face 73 connects thereon an obliquely forwardly and upwardly directed portion 74, while at the rear side connects thereon an obliquely rearwardly and upwardly directed portion 75. The portion 74 includes two strips 76, via which the rear shoe is pivotably connected to the end plate 65 about a pivot pin 77. In this connection, the pivot pin 77 has a fixed position relative to the supporting beam 6 which constitutes part of the frame of the mowing machine. Above the supporting face 73 there is arranged a shock damper 78 attached to the end plate 65, which shock damper is made e.g. of resilient rubber or another similar resilient material. The shock damper 78 is mounted by means of a bolt 79 to a support 80, which is attached by means of a bolt 81 to the end plate 65. The front edge 86 of the portion 74 co-operates with the rear edge 87 or the bracket 64 of the shoe 61 in such a manner that said edges or the bracket, respectively, constitute stops bounding a downward movement of the supporting face 73. Relative to the direction of operative travel 60, the rear shoe 72 as a whole is located more to the rear than the inner shoe 61, the outer shoe 66 and the middle shoes 69. Seen in plan view, the rear shoe 72 is located behind the rear side of the supporting beam 6. Measured in the direction of operative travel 60, the supporting face 73 has in this embodiment a width 83 of approximately 10 cms. The front side of the supporting face 73 is located at a distance 82 from the plane 88 containing the axes of rotation of the row of adjacent mowing members 7 to 12. In this embodiment, the distance 82 is approximately twice as large as the distance 83. The distances 82 and 83 may also be slected differently. However, the distances 82 and 83 as shown constitute an advantageous embodiment.

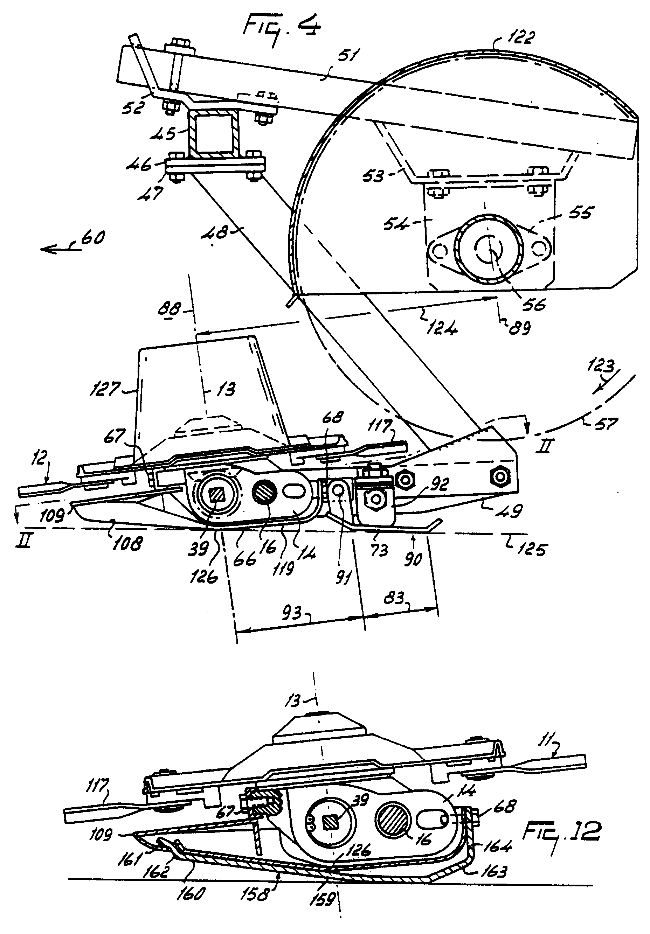

To the end of the supporting beam 6 facing away from the carrying frame 3 there is arranged a rear shoe 90 in an identical manner as the shoe 72, which, therefore, is not shown in further detail. In this connection, the rear shoe 90 is pivotably connected about a pivot pin 91 to a bracket 94 attached to the shoe 66. The rear shoe 90 cooperates with a shock damper 92, which is of identical design as shock damper 78. The shock damper 92 is connected to the end plate 49 in an identical manner as shock damper 78 to the end plate 65, which, therefore, is not shown in further detail. In view of the identical design of the rear shoe 90 to the shoe 72, parts of the rear shoe 90 corresponding to those of the shoe 72 have been indicated by the same reference numerals. The identical design of the rear shoes 72 and 90 may be such that they are formed symmetrically relative to a vertical plane extending in the direction 60 and containing (measured transversely to the direction 60) the middle of said rear shoes. The shoes 72 and 90 are then identical to each other in such a manner that they are attachable both behind the shoe 61 and the shoe 66. The supporting face 73 of the rear shoe 90 is located with its front side at a distance 93 from the plane 88. In this embodiment, the distance 93 is slightly less than the distance 82 but may also be equal thereto. In this embodiment, the distance 93 is slightly larger than 1.5 times the width 83 of the supporting face 73 of the rear shoe 90. As is apparent in particular from Figure 4, the rear shoe 90 is located, relative to the direction of operative travel 60, completely behind the rear side of the supporting beam 6. Seen in plan view, the rear shoe 90 is located behind the outer shoe 66.

The supporting shoes 69, which are arranged at the drive units 14 of the respective mowing members 7 to 12, are each provided near their rear side with a rear shoe 96. Each of said rear shoes 96 has a supporting face 100, which with its front side is located at a short distance 98 from the plane 88. Measured in the direction of operative travel 60, the supporting face 100 has a width 90 which in this embodiment is approximately 175 mms. In this connection, the supporting face 100 extends over a portion 101 to behind the rear side of the supporting beam 6. The portion 101 is approximately equal to half of the portion 102 of the supporting face which extends in front of the rear side of the supporting beam 6 and is located therebelow. The rear side of the supporting beam is constituted by short projections 95 cast onto the drive units 14, to which projections are arranged the bolts 68 for the attachment of the shoe 96 to the supporting beam 6. The rear shoe 96 has at its rear side an upwardly bent portion 103, the rear side of which is located outside the rear side of the supporting beam 6 at a distance 97 of, in this embodiment, approximately 7.5 cms. The distances 101 and 97 may also be selected differently. The rear shoe 96 is rigidly connected to the middle shoe 69 and extends outside the rear side of the supporting beam 6 over a certain distance. Preferably, the distance 100 is minimally equeal to approximately one third to half of the distance 104, over which the rear side of the supporting beam extends behind the plane 88.

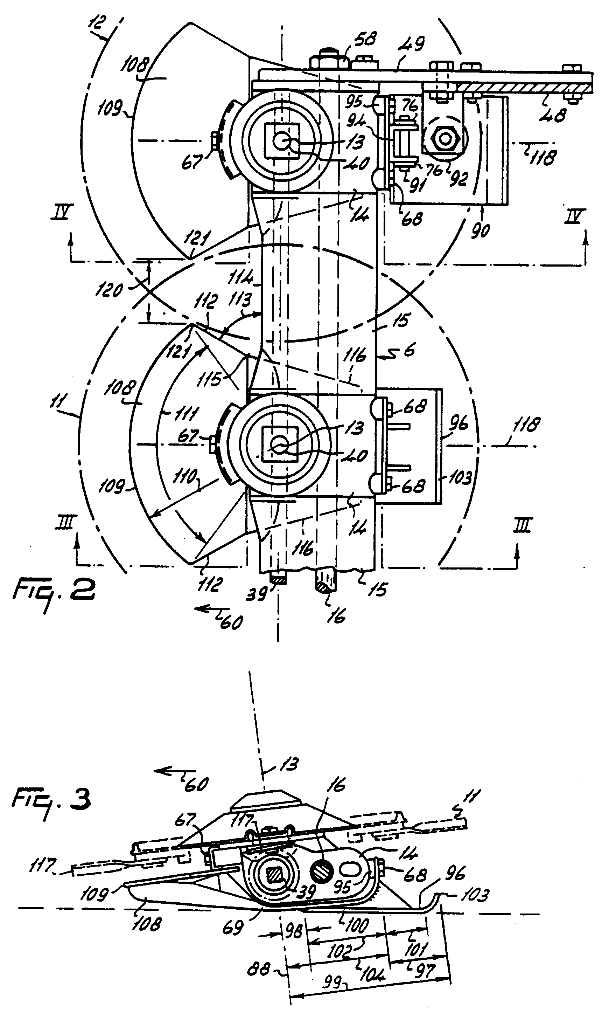

Each of the middle shoes 69 and the identical outer shoe 66 is provided at its front side with a shoe cap 108. The shoe cap extends in front of the front side of the relevant drive unit 14 and hence in front of the supporting beam 6 (Figures 3 and 4). The shoe cap 108 of each shoe 69 and outer shoe 66, respectively, has a front edge 109 which is concentrical with the axis of rotation 13 of the mowing member arranged on the relevant drive unit 14. The front edge 109 is located at a distance 110 from the axis of rotation 13, so that it extends to near the mowing knives 117 arranged at the mowing members. The front edge 109 extends over an angle 111 of approximately 110° about the axis of rotation 13. The ends of the front edge 109 connect to the side edges 112 of the cap, which side edges converge relative to each other from the front edge to the rear and are located symmetrically relative to a vertical plane 118 extending in the direction of operative travel 60 and containing axis of rotation 13. The side edges 112 include angles 113 of approximately 60° with the front edges 114 of the spacers 15. The front edges 114 of the spacers 15 constitute parts of the front edge of the supporting beam 6. The side edges 112 connect in points 115 to side edges 116 of the bottom side 119 of the relevant shoe 69 or 66. Like the edges 112, the side edges 116 of the bottom side 119 converge relative to each other to the rear but at a smaller angle than the side edges 112, the arrangement being such as is apparent in particular from Figure 2. The shoe caps 108 of adjacent supporting shoes 69 and the shoe 66 located beside a supporting shoe 69, respectively, are interspaced at a distance 120 of, in this embodiment, approximately 7.5 cms. Preferably, said distance is greater than 4 cms and smaller than 11 cms. From the adjacent ends 121 of the front edges 109 of adjacent shoe caps, the side edges 112 diverge towards the rear (Figure 2).

During use, the mowing machine according to the invention is coupled by means of the coupling trestle 26 to the lifting hitch of a tractor or a suchlike vehicle. In this connection, the pins 27 are coupled to the lifting arms 29 and the strips 28 to the top rod 30 of the three-point lifting hitch of the tractor or a suchlike vehicle. The coupling shaft 37 is coupled via an intermediate shaft to the power take-off shaft of the tractor.

During operation, the implement is moved in the direction as shown by arrow 60, while the row of mowing members formed by the mowing members 7 to 12 extends transversely to the direction of operative travel 60. The mowing machine is adjusted relative to the tractor or a suchlike vehicle in such a manner that it rests with at least part of its weight on the soil, which is done by means of the inner shoe 61, the outer shoe 66, the middle shoe 69 and the rear shoes 72, 90 and 96. During movement, the mowing section 2 is capable of pivoting relative to the carrying frame 3 about the pivot axis 19. Due to the pivotable connection of the carrier arm 22 to the bracket 23, the pivot axis 19 itself can move again in height relative to the bracket 23 and hence relative to the coupling trestle 26. Thus, in particular the mowing section 2 can constantly bear on the soil during moving and follow the unevennesses thereof. In this connection, part of the weight can be transferred by means of the springs 31 to the coupling trestle 26 and hence to the tractor. The engaging points of the springs 31 to the relevant parts may be adjustable in order to adjust the tensile force of the springs 31 and hence the part of the weight of the machine bearing on the soil.

During operation, the mowing members 7 to 12 are rotated via the transmissions between the axes 40 of the mowing members and the shaft 37. In the embodiment shown, adjacent mowing members are rotated in opposite directions, as is indicated by arrows 41. The transmission, in particular in the drive units 40, may be arranged such that the mowing members are also rotated differently. For example, the mowing members 7, 8 and 9 may be rotated in a direction opposite to that of the mowing members 10, 11 and 12. The shaft 56 is rotated from the shaft 37 via the transmission in the gear box 71 and the coupling shaft 70, and hence the processing member 57 about the centre line 84 of the shaft 56. Usually, this drive will be such that the processing member 57 rotates in the direction as indicated by the arrow 123. The processing member 57 will pick up the crop mown by the mowing members and process same in a specific manner in co-operation with the hood 122 arranged about its top side. This processing depends on the shape of the processing member 57 and of the hood 122. This shape may be selected at wish in order to obtain the desired processing, e.g. a crushing of the crop. The processing member 57 is located behind the plane 88 containing the axes of rotation of the row of adjacent mowing members. The processing member 57 is arranged such that it is capable of picking up the mown crop moving rearwardly over the mowing members 7 to 12 during the movement in the direction 60. In this connection, the centre line 84 of the processing member 57 is located at a distance 124 behind the plane 88.

Due to the presence of the processing member 57 and the hood 122, the whole of the mowing section 2 and the processing member 57 is heavier than the mowing section 2 consisting of the supporting beam 6 and the mowing members alone. The centre of gravity of the mowing section with the processing member 57 and hood 122 is located at a distance behind the plane 88. This distance will be dependent on the shape and the design of the mowing section and of the crop processing mechanism comprising the processing member 57 and the hood 122. This centre of gravity is located more to the rear than that of the mowing section 2 alone. In order to allow the weight of the mowing section 2 with processing member 57 and hood 122 to bear in a proper manner on the soil without undue surface pressure, the rear shoes 72, 90 and 96 have been arranged at the supporting beam 6. The supporting faces 73 of the rear shoes 72 and 90 and the supporting face 100 of the rear shoe 96 are provided in such a manner that, during operation, they are approximately parallel to the surface 125 of the soil over which the mowing section 2 moves. Due to the position of the rear shoes behind the plane 88, they are located more below the centre of gravity of the assembly of mowing section 2 and processing member 57 with hood 122. As a result, the weight of this assembly can be transferred to the soil in an advantageous manner. For this reason the rear shoes 72 and 90 are located behind the supporting beam 6 and at a distance 82 and 93, respectively, behind the plane 88. In addition, the supporting faces are located, like in this embodiment, at a distance 85 in front of the plane 89 which is parallel to the plane 88 and contains the axis of rotation 84. At the rear shoe 72, the distance 85 is approximately equal to the width 83. In addition, the rear shoes 96 extend hereabout with their supporting face over a distance 101 behind the rear side of the supporting beam 6. The thus arranged rear shoes contribute in an advantageous manner to a proper transfer of the weight of the mowing section 2 and the processing member 57 to the soil. In addition, it is possible to load hereby the attachment of the assembly of mowing section 2 and processing member 57 to the carrying frame 3 in an advantageous manner. Furthermore, the suspension of the carrying frame 3 and the coupling trestle 26 to the tractor or a suchlike vehicle is advantageously effected thereby.

The attachment of the rear shoes to the mowing machine is effected in an advantageous manner in that they are arranged at the supporting beam 6. A simple construction is obtained hereby. Furthermore, it is achieved that the rear shoes can maintain in an advantageous manner their proper position relative to the supporting beam 6. The inner shoe 61, the outer shoe 66 and the middle shoes 69 are designed such that the axes of rotation 13 are capable of being adjusted more or less obliquely upwardly and forwardly relative to the soil surface 125 in order to be able to mow on the desired mowing level. For this purpose, a bending line 126, which the bottom side of the inner shoe 61, the outer shoe 66 and the middle shoes 69 form with the bottom side of the shoe caps arranged at the front side of said shoes, is located slightly in front of but near the plane 88. Since, usually, the shoes rest on the more or less impressed top side of the stubbles of the mown crop, yet a proper and, measured in the direction of operative travel, wide support of these shoes on the top side of the stubbles will take place. Relative to the plane 88, the bottom side 100 of the rear shoe 96 is arranged such that it is parallel or substantially parallel to the soil surface with the most frequently occurring inclined position(s) of the plane 88 for the determination of the mowing level. Thus, the rear shoes 96 will contribute favourably to the support of the mowing machine on the soil. Since the rear shoe 72 and the rear shoe 90 are located behind the plane 88 farther than the middle rear shoes 96, it is advantageous to have these shoes slightly movable in height relative to the supporting beam 6. For this reason, preferably, said rear shoes 72 and 90 are connected slightly movable about their pivot pins 77 via the relevant end plates 65 or the bracket 94 to the supporting beam. Towards the bottom side, the movability of the rear shoes 72 and 90 is limited in that this downward movement about the pin 77 is limited by the stop 86 and 87, respectively 64. With the rear shoe 90, its front side together with the rear side of the shoe 66 will constitute stops to limit the downward movement about the pivot pin 77. The movement in height of said rear shoes is limited by the presence of the rubber shock dampers 78. Said shock dampers are slightly resilient, so that the said rear shoes 72 and 90 can give way resiliently in height. The shock dampers 78 are so selected that the rear shoes bear with their supporting faces 73 in the desired manner on the soil in order to be able to yield a sufficient contribution to the support of the mowing machine on the soil. Preferably, the shock dampers 78 are such that, when the mowing machine is lifted from the soil, they remain in contact with the top side of the rear shoes in the position wherein the downward movement is limited by the stops 86 and 87, respectively 64 or 66. Hereby it is achieved that the rear shoes 72 and 90 will not be able to move in an undesirable manner about their pivot pins 77 when the machine is in the lifted position. The lifted position of the machine is used e.g. in the transport position thereof. In said transport position, the mowing section 2 with the processing member 57 is pivoted about the pivot axis 19 over approximately 90°. Then, the mowing section 2 extends straightly upwards from the pivot axis 19. In a manner not shown in further detail, the mowing section 2 can be brought into said transport position by means of the lifting mechanism 32. The rear shoes 72 and 90 are arranged advantageously near the ends of the row of mowing members 7 to 12, so that they contribute to a proper stability of the mowing section 2. Seen in plan view in Figure 1, the supporting shoes 72 and 90 are located near the ends of the processing member 57. Seen in plan view, the supporting shoe 90 is located near an end of a processing member 57. The supporting shoe 72, being located behind the inner shoe 61, is located at a short distance outside the other end of the processing member 57. Due to this position of the rear shoes 72 and 90, they provide a proper support near the support of the processing member 57 to the mowing section 2. The processing member 57 is arranged at the mowing section 2 via the frame arms 50 and 51. Said frame arms 50 and 51 are located also near the ends of the row of mowing members, seen in plan view according to Figure 1. In order to be able to absorb all forces in an advantageous manner, the shock dampers 78 are so formed and arranged that, in a position of the supporting face 73 of the shoes 72 and 90 parallel to the surface of the soil 125, they bear sufficiently forcefully against the top side of the rear shoes in order to absorb the desired forces.

The processing member 57 is connected to the mowing section 2 in a simple manner. Hereby, the frame arms 50 and 51 are coupled by means of a simple bolt connection to the coupling plates 52 of the frame beam 45. The frame beam 45 is coupled in a proper manner via the support 48 to the end of the supporting beam 6 facing away from the carrying frame 3. The frame beam 45 is located at such a level above the mowing members 7 to 12 that, during movement of the machine in the direction 60, the mown crop moves below under the frame beam 45 and over across the mowing members towards the processing member 57. The processing member 57 picks up the crop before it can move over the rear side of the mowing members to below under the processing member 57. Hereby, the mown crop is kept by means of the transport hats 127 arranged on the mowing members 7 and 12 within a width which is equal to the length of the processing member 57. For this purpose, the mowing members 7 and 12 move with their, relative to the direction of operative travel 60, forwardly directed sides towards each other. Since the attachments of the frame arms 50 and 51 to the beam 45 are arranged near the supported ends of the beam 45, it is possible for the beam 45 to provide the frame arms 50 and 51 a proper support.

During movement over the soil, it is in particular the shoe caps 108 that come into contact with unevennesses and/or solid obstacles, such as e.g. stones, lying in the field. Said shoe caps will protect the mowing members against such obstacles so as to prevent possible damage caused thereby. During movement, it is in particular at the front side of the supporting beam 6 that soil may adhere. In order to prevent this, the side edges 112 of the shoe caps 108 enclose the angle 113 with the front side 114 of the supporting beam 6. In this connection, the space between facing edges 112 of adjacent shoe caps diverges to the rear. Relative to the distance 120, the space between the side edges 112 of adjacent shoe caps increases towards the rear. Hereby it is achieved that hardly any soil will adhere between the shoe caps of adjacent shoes. Due to the fact that no soil will adhere to the supporting beam, the weight of the mowing section will not be increased. As a result, the pressure of the mowing machine via the shoes onto the soil will remain the same, which is desirable for a proper mowing action. The mowing machine will not compress the crop stubbles any further, and the machine will remain movable over the field in a flexible manner.

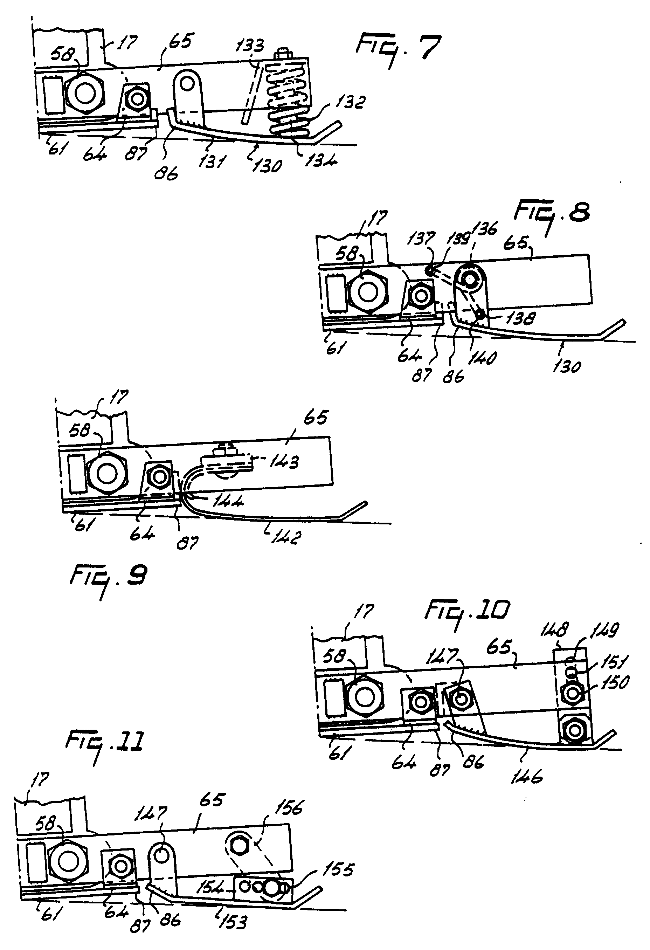

Although in the embodiment shown the rear shoes 72 and 90 are movable about the pivot pin 77 in dependence on the spring action of the shock damper 78, it is also possible to obtain said movability in a different manner. In Figure 7 there is shown a rear shoe 130 which can be used instead of the rear shoes 72 and 90. In principle, the rear shoe 130 corresponds to the rear shoes 72 and 90 and will, therefore, not be described in further detail. Consequently, parts of the rear shoe 130 corresponding to those of the rear shoe 72 or 90 have been indicated by the same reference numerals as in the preceding embodiment. The rear shoe 130 has a supporting face 131 which corresponds to supporting face 73. The supporting face 131 is slightly bent upwardly, so that unevennesses can be passed more easily. In this embodiment according to Figure 7, the shock damper 78 is replaced by a pressure spring 132. The pressure spring 132 is located between a support 133 attached to the end plate 65 and the top side of the supporting face 131. The spring is centered about a pin 134 which is attached to the top side of the supporting face 131. The top side of the pin 134 is located interspaced from the support 133. As a result, the rear shoe 130 is movable in height relative to the support 133 and the end plate 65, respectively. Like in the preceding embodiment, the rear shoe 130 is movable about a pivot pin 77. A downward movement of the rear shoe is limited, the stop being formed by the front side 86 of the rear shoe 130 and the rear side 87 of the inner or outer shoe located in front of the relevant rear shoe.

In Figure 8 there is shown the supporting shoe 130 having a different spring construction. In Figure 8, there is arranged about the pivot pin 77 a screw spring 138, the ends 137 and 138 of which are located against a stop 139 provided at the end plate 65 and against a stop 140 provided at the rear shoe, respectively.

In Figure 9 there is shown an embodiment of a resilient rear shoe 142, which may e.g. replace the rear shoes 72 and 90. The rear shoe 142 consists of a bent spring steel plate attached to a lug 143 provided at the end plate 65. The end of the resilient rear shoe attached to the lug 143 can be strengthened yet by means of a resilient auxiliary plate 144 of spring steel. The resilient force of the rear shoe 142 will be selected such that the desired pressure can be transferred via the shoe 142 onto the soil.

Although in the embodiments shown in Figures 1 to 9 the rear shoes arranged near the ends of the supporting beam and located behind the inner shoe and the outer shoe, respectively, are always resiliently movable in height relative to the supporting beam 6, it is also possible to use rear shoes that are arranged non-resiliently relative to the supporting beam 6 and, during operation, assume a fixed position relative thereto. In Figures 10 and 11 there are shown two embodiments of supporting shoes which at choice are lockable in one of a plurality of positions relative to the supporting beam. Figure 10 shows a rear shoe 146 which in principle corresponds to the rear shoe 130 and, therefore, will not be described in further detail. The rear shoe 146 is coupled to the end plate 65 for adjustment about a pivot pin 147. Furthermore, the rear shoe 146 is pivotably connected to an adjusting member comprising an adjusting strip 148 provided with a plurality of apertures 149. At choice, a bolt 150 can be passed through one of the plurality of apertures 149, which bolt can also be passed through one of e.g. two apertures 151 provided in the end plate 65. Due to the presence of the apertures 149 and 151, it is possible to attach the strip 148 more or less high to the end plate 65, so that the position of the rear shoe 146 about the pivot pin 147 can be adjusted. For example, the adjustment of the rear shoe 148 may be of importance when the mowing members 7 to 12 will have to be used in a more or less inclined position in order to be able to mow the crop more or less high. The position of the rear shoe 146 can be adapted to the position of the supporting beam 6 determined by the more or less inclined position of the axes of rotation 13 of the mowing members, so that the rear shoe 146 rests with its supporting face on the soil in an advantageously possible manner. Figure 11 shows an embodiment of a rear shoe 153 which, in principle, is adjustable relative to the end plate 65 or the end plate 49 in the same manner as the rear shoe 146. In this embodiment, there is attached to the shoe 153 a strip 154 constituting part of an adjusting member, which strip includes a plurality of apertures 155. An arm 156 pivotably arranged at the end plate 65 can be attached at choice via one of the apertures 155 to the strip 154 in order to be able to adjust the position of the rear shoe 153 relative to the end plate 65 and hence relative to the supporting beam 6.

It is also possible to combine the construction of a resilient rear shoe according to Figures 1 to 9 with an adjustable construction, such as e.g. that according to Figures 10 and 11. In such a combination, e.g. the attachment of a resilient construction to the end plate 49 or 65 may be adjustable. Also, for example, the stop 137 from Figure 8 may be arranged adjustably to the end plate 65. As a result, in order to obtain a same counterpressure, the rear shoe 130 may assume a different position relative to the supporting beam 6. The construction according to Figure 9 may be such that the strip 143 is adjustable in height relative to the end plate 65. In the embodiment according to Figures 1 to 7, the attachment of the shock damper may be movable and, at choice, be lockable in one of at least two positions to the end plate 65.

Although in the embodiment shown the middle shoes 69 arranged below the drive units 14 are provided with rear shoes 96 that are rigidly connected to the middle shoes and hence rigidly connected to the supporting beam 6, it will also be possible in principle to render the rear shoes 96 movable under spring pressure and/or adjustable relative to the supporting beam 6 in a corresponding manner as is indicated with respect to the rear shoes 72 and 90, respectively, and the constructions of Figures 7 to 11.

The rear shoes may also be coupled detachably and exchangeably to the supporting beam 6. In Figure 12 there is shown a middle shoe 69 which is provided with a detachable and exchangeable rear shoe 158. The rear shoe 158 has a supporting face 159 which is e.g. equally large as the width 83 of the rear shoe 72. The supporting face 159 is located substantially behind the bending line 126 and is at least approximately parallel to the surface to be mown corresponding to the supporting face 100 and the supporting face 73. The rear shoe 158 has an obliquely upwardly extending front face 160 which is located substantially against the obliquely upwardly extending bottom side of the shoe cap 108. At its front side, the rear shoe 158 has an upwardly and forwardly bent lug 161, which fits in an aperture 162 in the bottom side of the shoe cap 108. The lug 161 is enclosed in the aperture 162 in a direction parallel to the supporting beam 6. At its rear side, the rear shoe 158 has a, from the supporting face 159 towards the rear, obliquely upwardly extending portion 163 comprising an upwardly directed connection lug 164. The lug 164 can be connected to the relevant drive unit 14 and the relevant shoe 69 by means of the bolts 68. Via the lug 161 and the lug 164, the rear shoe 158 can be easily and quickly coupled to the shoe 69, respectively detached therefrom. The supporting face 159 is spaced from the bottom side of the shoe 66. When the rear shoe 158 is removed from the shoe 66, the supporting beam can be tilted to a higher extent about the bending line in order to be able to obtain e.g. an extra high cutting height. If desired, it is posisble to let the supporting face 159 be wider than the shown distance 83, so that this supporting face extends farther to the rear. For example, this supporting face 159 may extend to the rear to beyond the lug 164. The far forwardly, i.e. to the aperture 162, extending rear shoe also constitutes a protection for the shoe 69. The supporting face 158 is located parallel to the soil in the mostly used forwardly inclined position of the mowing members. In this connection, the supporting face 158 is located spaced from the bottom side of the shoe 69 situated against the housing 14. The housing 14 may be given the most advantageous shape, e.g. the smallest possible one. Therefore, the housing 14 need not be adapted to the position of the supporting face 158. If it is desired to support the supporting face 158 against the bottom side of the shoe, e.g. the supporting face 158 may be provided at its upper side with a support which reaches to against the bottom side of the shoe 69. For example, this may be useful when the supporting face 158 is subjected to shocks on fields that are uneven and/or contain many stones, or when the supporting face 158 is larger.

Although in the embodiment shown the rear shoes are used with a mowing machine comprising a crop processing member 57, the rear shoes can also be used with a mowing machine not including such a member. For example, the rear shoes can be used with a mowing machine without processing member in order to provide same a sufficient stability on more uneven fields. The employment of the rear shoes per se to a supporting beam 6 composed of drive units 14, spacers 15 and tensile rod 16 is useful in order to be able to properly support a long supporting beam 6.

## Claims

1. A mowing machine comprising a frame having a supporting beam (6) to which are arranged a plurality of mower members (7 to 12) each of which is rotatable about a generally vertical axis of rotation (13), said supporting beam (6) being provided with a shoe cap (108) fixed in its position near the front side of the supporting beam (6) and with an adjustable shoe (72, 90) which is movable at least partly in height relative to the supporting beam and which has a supporting face (73) bearing during operation of the mowing machine with at least a part of the weight of the machine on the soil, said adjustable shoe being situated rearwardly of said shoe cap (108), characterized in that the shoe cap (108) is arranged at the front side of and integral with a supporting shoe (61, 66) mounted in a fixed position relative to the supporting beam (6) and extending below said beam, whereby the shoe cap (108) is situated in front of the supporting beam and the supporting shoe extends from the front side of a plane (88) containing the axes of rotation of the mowing members to behind said plane (88), the adjustable shoe forms a rear shoe (72, 90) situated behind the supporting beam (6) and is hingeably mounted relative to the supporting beam about a pivot axis (77, 91) situated rearwards of the supporting beam and near the rear side of the supporting beam, the pivot axis (77, 91) is arranged near the front side of the supporting face (73) of the rear shoe (72, 90), the shoe cap (108) and the supporting shoe (61, 66) being on their bottom side integrally formed by a plate, which is bent along a bending line (126) located in front of the said plane (88) containing the axes of rotation of the mowing members but near said plane (88), at least part of the machine being supported, during operation, in at least two different orientations of the axes of rotation of the mowing members, on the supporting shoe (61, 66) along said bending line (126) and on the supporting face (73) of the rear shoe (72, 90), said mowing machine comprising a carrying frame (3) having a coupling trestle (26) by means of which the mowing machine can be coupled to the lifting arms of a three-point lifting hitch of a tractor or a suchlike vehicle.

2. A mowing machine as claimed in claim 1, characterized in that the adjustable rear shoe (72, 90) is mounted to said supporting beam (6) near the attachment of a further processing member (57) to said supporting beam (6).

3. A mowing machine as claimed in claim 2, characterized in that near each end of the supporting beam (6) there is arranged an adjustable rear shoe (72, 90) and that the processing member (57) is located behind the plane (88) containing the axes of rotation of the mowing members.

4. A mowing machine as claimed in any one of the preceding claims, characterized in that the supporting beam (6) is composed of drive units (14, 17) and spacers (15) arranged therebetween, said drive units and spacers being drawn up against each other under tension by means of a tensile member (16) and that an adjustable rear shoe (72, 90) is provided on a drive unit (14, 17) of the supporting beam (6).

5. A mowing machine as claimed in any one of the preceding claims, characterized in that, during operation, an adjustable rear shoe (72, 90) is, at least partly, resiliently movable in height relative to the frame.

6. A mowing machine as claimed in one of the preceding claims, characterized in that the adjustable rear shoe (146, 153) is fixable selectively in one of at least two different positions relative to the supporting beam.

7. A mowing machine as claimed in any one of the preceding claims, characterized in that, seen in side view, a adjustable rear shoe (72, 96) has a substantially straight supporting face (73, 100) which, during operation, bears on the surface of the soil, over which the mowing machine can be moved during operation.

8. A mowing machine as claimed in any one of the preceding claims, characterized in that the shoe caps (108) are arranged below adjacent mower members (7 to 12), while the side edges (112) of the adjacent shoe caps, from a point where they are closest, towards the rear, relative to the direction of operative travel (60) of the machine during operation, diverge to at least near the front side of the supporting beam.

9. A mowing machine as claimed in any one of the preceding claims, characterized in that the supporting beam (6) carrying the mower members (7 to 12) is pivotably coupled to the carrying frame (3).

10. A mowing machine as claimed in any one of the claims 2-9, characterized in that the supporting beam (6) carrying the mower members (7 to 12) is of a hollow structure enclosing a drive shaft (39) and transmission members via which the drive shaft is coupled to the mower members, which drive shaft (39) is coupled via transmission members to the coupling shaft connectable to the power take-off shaft of a tractor or a suchlike vehicle and that the processing member (57) is rotatable about an axis (56) and via a coupling shaft (70) and an exchange gear box (71) provided with exchange gear wheels is coupled to the coupling shaft.

## Patentansprüche

1. Mähmaschine mit einem Rahmen, der einen Tragbalken (6) aufweist, an dem mehrere Mähglieder (7 bis 12) angeordnet sind, die jeweils um eine im allgemeinen vertikale Drehachse (13) drehbar sind, wobei der Tragbalken (6) mit einer Schuhabdeckkappe (108) versehen ist, die nahe der Vorderseite des Tragbalkens (6) in ihrer Position festgelegt ist, sowie mit einem verstellbaren Schuh (72, 90), der relativ zu dem Tragbalken zumindest teilweise höhenbeweglich ist und eine Tragfläche (73) hat, die im Betrieb der Mähmaschine deren Gewicht zumindest teilweise auf dem Boden abstützt, und wobei der verstellbare Schuh hinter der Schuhabdeckkappe (108) angeordnet ist,
dadurch gekennzeichnet, daß die Schuhabdeckkappe (108) einstückig mit einem Stützschuh (61, 66) an dessen Vorderseite ausgebildet und der Stützschuh relativ zu dem Tragbalken (6) lagefest angeordnet ist und sich unter dem Balken erstreckt, wobei die Schuhabdeckkappe (108) vor dem Tragbalken angeordnet ist und sich der Stützschuh von der Vorderseite einer die Drehachsen der Mähglieder enthaltenden Ebene (88) bis hinter diese Ebene (88) erstreckt; der verstellbare Schuh hat einen hinter dem Tragbalken (6) gelegenen hinteren Schuh (72, 90) und ist relativ zu dem Tragbalken um eine Schwenkachse (77, 91) schwenkbar, die hinter dem Tragbalken und nahe seiner Rückseite liegt; die Schwenkachse (77, 91) ist nahe der Vorderseite der Tragfläche (73) des hinteren Schuhs (72, 90) angeordnet, und die Schuhabdeckkappe (108) und der Stützschuh (61, 66) sind an ihrer Unterseite einstückig als Platte ausgebildet, die entlang einer Biegelinie (126) umgebogen ist, die sich vor, jedoch nahe der die Drehachsen der Mähglieder enthaltenden Ebene (88) befindet, wobei die Maschine im Betrieb zumindest teilweise in mindestens zwei verschiedenen Positionen der Drehachsen der Mähglieder auf dem Stützschuh (61, 66) entlang der Biegelinie (126) und auf der Tragfläche (73) des hinteren Schuhs (72, 90) abgestützt ist, und wobei die Mähmaschine einen Tragrahmen (3) mit einem Anbaubock (26) aufweist, mittels dessen die Mähmaschine an die Unterlenker einer Dreipunkt-Hebevorrichtung eines Schleppers oder ähnlichen Fahrzeuges anzuschließen ist.

2. Mähmaschine nach Anspruch 1,
dadurch gekennzeichnet, daß der verstellbare hintere Schuh (72, 90) an dem Tragbalken (6) nahe der Stelle angeordnet ist, an der ein weiterer Konditionierer (57) an dem Tragbalken (6) befestigt ist.

3. Mähmaschine nach Anspruch 2,
dadurch gekennzeichnet, daß nahe jedem Ende des Tragbalkens (6) ein verstellbarer hinterer Schuh (72, 90) angeordnet ist, und daß sich der Konditionierer (57) hinter der Ebene (88) befindet, in der die Drehachsen der Mähglieder liegen.

4. Mähmaschine nach einem der vorhergehenden Ansprüche,
dadurch gekennzeichnet, daß sich der Tragbalken (6) aus Antriebseinheiten (14, 17) und dazwischenliegenden Distanzhaltern (15) zusammensetzt, wobei die Antriebseinheiten und die Distanzhalter mittels eines Zuggliedes (16) gegeneinander verspannt sind, und daß ein verstellbarer hinterer Schuh (72, 90) an einer Antriebseinheit (14, 17) des Tragbalkens (6) angeordnet ist.

5. Mähmaschine nach einem der vorhergehenden Ansprüche,
dadurch gekennzeichnet, daß im Betrieb ein verstellbarer hinterer Schuh (72, 90) relativ zu dem Rahmen zumindest teilweise elastisch höhenbeweglich ist.

6. Mähmaschine nach einem der vorhergehenden Ansprüche,
dadurch gekennzeichnet, daß der verstellbare hintere Schuh (146, 153) wahlweise in einer von mindestens zwei verschiedenen Positionen relativ zu dem Tragbalken feststellbar ist.

7. Mähmaschine nach einem der vorhergehenden Ansprüche,
dadurch gekennzeichnet, daß in Seitenansicht ein verstellbarer hinterer Schuh (72, 90) eine im wesentlichen ebene Tragfläche (73, 100) aufweist, die im Betrieb auf der Oberfläche des Bodens aufliegt, über welchen die Mähmaschine im Betrieb zu ziehen ist.

8. Mähmaschine nach einem der vorhergehenden Ansprüche,
dadurch gekennzeichnet, daß die Schuhabdeckkappen (108) unter benachbarten Mähgliedern (7 bis 12) angeordnet sind, wobei die Seitenflächen (112) der benachbarten Schuhabdeckkappen von einem Punkt aus, an dem sie sich am nächsten liegen, nach hinten relativ zur Arbeitsrichtung (60) der im Betrieb befindlichen Maschine zumindest bis in die Nähe der Vorderseite des Tragbalkens divergieren.

9. Mähmaschine nach einem der vorhergehenden Ansprüche,
dadurch gekennzeichnet, daß der die Mähglieder (7 bis 12) tragende Tragbalken (6) schwenkbar mit dem Tragrahmen (3) verbunden ist.

10. Mähmaschine nach einem der Ansprüche 2 bis 9,
dadurch gekennzeichnet, daß der die Mähglieder (7 bis 12) tragende Tragbalken (6) ein hohles Bauteil ist und eine Antriebswelle (39) sowie Getriebeglieder enthält, über welche die Antriebswelle mit den Mähgliedern verbunden ist, wobei die Antriebswelle (39) über Getriebeglieder mit der Kupplungswelle verbunden ist, die an die Zapfwelle eines Schleppers oder eines ähnlichen Fahrzeuges anzuschließen ist, und daß der Konditionierer (57) um eine Achse (56) drehbar und über eine Kupplungswelle (70) und einen mit Wechselgetrieberädern versehenen Wechselgetriebekasten (71) mit der Kupplungswelle verbunden ist.

## Revendications

1. Machine faucheuse comprenant un châssis ayant une poutre de support (6) sur laquelle sont disposés plusieurs organes faucheurs (7 à 12) chacun desquels est rotatif autour d'un axe de rotation (13) généralement vertical, ladite poutre de support (6) étant munie d'un chapeau (108) de sabot fixé dans sa position près du côté antérieur de la poutre de support (6) et d'un sabot réglable (72, 90) qui est mobile au moins partiellement en hauteur par rapport à la poutre de support et qui a une face d'appui (73) portant sur le sol pendant le travail de la machine faucheuse, avec une partie au moins du poids de la machine, ledit sabot réglable étant situé à l'arrière dudit chapeau de sabot (108), caractérisée en ce que le chapeau de sabot (108) est disposé sur le côté antérieur d'un sabot de support (61, 66) avec lequel il est intégral, ce sabot étant monté en position fixe par rapport à la poutre de support (6) et S'étendant en dessous de cette poutre, le chapeau de sabot (108) étant de ce fait situé en avant de la poutre de support, et le sabot de support s'étendant à partir du côté antérieur d'un plan (88) contenant les axes de rotation des organes faucheurs jusque derrière ce plan (88), le sabot réglable formant un sabot postérieur (72, 90) situé derrière la poutre de support (6) et étant monté pivotant par rapport à la poutre de support autour d'un axe de pivotement (77,91) situé à l'arrière de la poutre de support et près du côté postérieur de la poutre de support, l'axe de pivotement (77, 91) étant disposé près du côté antérieur de la face d'appui (73) du sabot postérieur (72, 90), le chapeau de sabot (108) et le sabot de support (61, 66) étant intégralement formés, sur leur face inférieure, par une plaque qui est courbée le long d'une ligne de courbure (126) située en avant dudit plan (88) contenant les axes de rotation des organes faucheurs, mais près de ce plan, une partie au moins de la machine étant supportée pendant le travail, dans au moins deux orientations différentes des axes de rotation des organes faucheurs, sur le sabot de support (61, 66) le long de ladite ligne de courbure (126) et sur la face d'appui (73) du sabot postérieur (72, 90), ladite machine faucheuse comportant un châssis porteur (3) avec un chevalet d'attelage (26) au moyen duquel la machine faucheuse peut être accouplée aux bras de levage d'un dispositif d'attelage - élevage trois points d'un tracteur ou d'un véhicule analogue.

2. Machine faucheuse selon la revendication 1, caractérisée en ce que le sabot postérieur réglable (72, 90) est monté sur ladite poutre de support (6) près du point d'attache d'un autre organe de traitement (57) sur ladite poutre de support (6).

3. Machine faucheuse selon la revendication 2, caractérisée en ce que, près de chaque extrémité de la poutre de support (6) est disposé un sabot postérieur réglable (72, 90) et en ce que l'organe de traitement (57) est situé derrière le plan (88) contenant les axes de rotation des organes faucheurs.

4. Machine faucheuse selon l'une quelconque des revendications précédentes, caractérisée en ce que la poutre de support (6) est composée d'unités d'entraînement (14, 17) et d'entretoises (15) disposées entre ces unités, lesdites unités d'entraînement et entretoises étant serrées l'une contre l'autre sous tension au moyen d'un organe de tension (16), et en ce qu'un sabot postérieur réglable (72, 90) est prévu sur une unité d'entraînement (14, 17) de la poutre de support (6).

5. Machine faucheuse selon l'une quelconque des revendications précédentes, caractérisée en ce qu'un sabot postérieur réglable (72, 90) est, pendant le travail, au 30 moins partiellement mobile élastiquement en hauteur par rapport au châssis.

6. Machine faucheuse selon l'une quelconque des revendications précédentes, caractérisée en ce que le sabot postérieur réglable (146, 153) peut être fixé sélectivement en une d'au moins deux positions différentes par rapport à la poutre de support.

7. Machine faucheuse selon l'une quelconque des revendications précédentes, caractérisée en ce que, vu de côté, un sabot postérieur réglable (72, 96) a une face d'appui (73, 100) pratiquement droite, qui porte pendant le travail sur la surface du sol sur laquelle la machine faucheuse peut être entraînée pendant le travail.

8. Machine faucheuse selon l'une quelconque des revendications précédentes, caractérisée en ce que les chapeaux de sabots (108) sont disposés en dessous d'organes faucheurs (7 à 12) adjacents, tandis que les bords latéraux (112) des chapeaux de sabots adjacents divergent vers l'arrière, à partir d'un point où ils sont les plus proches l'un de l'autre, par rapport au sens de marche (60) du travail de la machine pendant le travail, au moins jusqu'à proximité du côté antérieur de la poutre de support.

9. Machine faucheuse selon l'une quelconque des revendications précédentes, caractérisée en ce que la poutre de support (6) portant les organes faucheurs (7 à 12) est couplée de manière pivotante au châssis porteur (3).

10. Machine faucheuse selon l'une quelconque des revendications 2 à 9, caractérisée en ce que la poutre de support (6) portant les organes faucheurs (7 à 12) a une structure creuse renfermant un arbre d'entraînement (39) et des organes de transmission par l'intermédiaire desquels l'arbre d'entraînement est couplé aux organes faucheurs, cet arbre d'entraînement (39) étant couplé par l'intermédiaire d'organes de transmission à l'arbre de couplage pouvant être relié à l'arbre de prise de force d'un tracteur ou d'un véhicule analogue, et en ce que l'organe de traitement (57) est rotatif autour d'un axe (56) et par l'intermédiaire d'un arbre de couplage (70) et une boîte d'engrenages interchangeables (71) munie d'en10 grenages interchangeables est couplée à l'arbre de couplage.
